(19) Europäisches Patentamt
European Patent Office
Office européen des brevets

(11) **EP 4 730 220 A1**

(12) **DEMANDE DE BREVET EUROPEEN**

(43) Date de publication:
**22.04.2026 Bulletin 2026/17**

(21) Numéro de dépôt: **25208975.0**

(22) Date de dépôt: **15.10.2025**

(51) Classification Internationale des Brevets (IPC):
***G06Q 10/00*** *(2026.01)*

(52) Classification Coopérative des Brevets (CPC):
**G06Q 10/087; G06Q 10/04; G08G 1/096811; G08G 1/20; G08G 1/202**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.10.2024 FR 2411320**

(71) Demandeur: **Expleo France**
**78180 Montigny-le-Bretonneux (FR)**

(72) Inventeurs:
• **DUHAUTBOUT, Thibaud**
**78180 Montigny-le-Bretonneux (FR)**
• **MRABTI, Nassim**
**78320 La Verrie (FR)**
• **GUEDIRA, Youssef**
**78280 Guyancourt (FR)**

(74) Mandataire: **Santarelli**
**Tour Trinity**
**1 bis Place de la Défense**
**92400 Courbevoie (FR)**

(54) **PROCÉDÉ ET SYSTÈME POUR LA GESTION ET L'OPTIMISATION D'OPÉRATIONS LOGISTIQUES UTILISANT DES PLATEFORMES DE TRANSPORT AUTONOMES**

(57) L'invention concerne un procédé mis en œuvre par ordinateur pour la gestion et l'optimisation d'opérations logistiques utilisant des plateformes de transport autonomes, le procédé comportant les étapes suivantes :
- construire une représentation d'un réseau de transport comportant des chemins entre des points stratégiques, les points stratégiques comprenant des zones de transfert,
- construire une représentation des plateformes de transport autonomes,
- planifier de manière itérative afin d'établir, pour chaque opération logistique, un itinéraire et la plateforme de transport autonome qui réalisera l'itinéraire, en réalisant les sous étapes :
- affecter une plateforme,
- déterminer des itinéraires possibles étant les chemins entre une position initiale, des zones de transfert et une position finale, en réduisant un écart entre des horaires des itinéraires possibles et des contraintes de temps de l'opération logistique,
- déterminer pour chaque itinéraire possible, une énergie consommée,
- sélectionner l'itinéraire parmi les itinéraires possibles.

[Fig. 1]

# EP 4 730 220 A1

**Description**

**Domaine technique de l'invention**

L'invention a pour objet des procédés et systèmes pour la gestion et l'optimisation d'opérations logistiques utilisant des plateformes de transport autonomes circulant dans un réseau de transport. Plus particulièrement, l'invention concerne la détermination d'itinéraire à travers le réseau de transport et l'affectation de plateforme de transport autonomes aux opérations logistiques.

Elle concerne le domaine technique de la logistique utilisant des plateformes de transport autonomes.

**Technique antérieure**

La gestion d'opérations logistiques utilisant des plateformes de transport autonomes présente de nombreux challenges spécifiques que les méthodes de gestion d'opération logistiques existantes ne parviennent pas à surmonter efficacement.

Par exemple, une méthode de gestion d'opération logistiques peut comporter la définition d'itinéraire à travers un réseau de transport pour réduire les temps d'acheminement nécessaires.

Un autre exemple consiste à affecter des missions de transport logistique à une flotte de véhicule, véhicule aussi appelé plateforme dans le présent texte, en maximisant l'utilisation des véhicules de la flotte.

La définition des itinéraires peut également être réalisée de manière à livrer les cargaisons juste à temps de manière à réduire les temps de stockage de cargaison.

L'arrivée de nouvelles technologies de transport, par exemple l'électrification des véhicules, amène de nouvelles contraintes pour la gestion des opérations logistiques utilisant des plateformes de transport autonome.

Les méthodes de gestion d'opérations logistique actuelles sont notamment mal adaptées à des plateformes de transport ayant une faible autonomie en comparaison des plateformes de transport traditionnelles telle que des trains ou camions diesel. Elles sont également mal adaptées à des plateformes de transport équipées de batteries électriques fournissant l'énergie utilisée pour le transport nécessitant des temps de charge long en comparaison des temps nécessaires pour remplir le réservoir d'un véhicule de transport de marchandises traditionnel.

**Exposé de l'invention**

La présente invention vise à remédier à tout ou partie des inconvénients de l'état de la technique cités ci-dessus.

A cet effet, selon un premier aspect, l'invention concerne un procédé mis en œuvre par ordinateur pour la gestion et l'optimisation d'opérations logistiques utilisant des plateformes de transport autonomes circulant dans un réseau de transport, chaque opération logistique comportant, un point de départ, un point d'arrivée et des contraintes de temps, le procédé comportant les étapes suivantes :

- construire une représentation du réseau de transport, la représentation du réseau comportant des chemins entre des points stratégiques du réseau de transport, les points stratégiques comprenant des zones de transfert, chaque chemin ayant des données indicatives d'un temps de parcours et d'une énergie consommée pour parcourir le chemin correspondant,
- construire une représentation des plateformes de transport autonomes, la représentation des plateformes comportant, en fonction d'un temps, pour chaque plateforme, une position dans le réseau de transport,
- planifier les opérations logistiques afin d'établir, pour chaque opération logistique, un itinéraire et la plateforme de transport autonome qui réalisera l'itinéraire, la planification étant un processus itératif comportant les sous étapes suivantes :
- affecter une plateforme de transport autonome à chaque opération logistique en utilisant les positions dans le réseau de transport de la représentation des plateformes et la zone de transfert correspondant au point de départ,
- déterminer pour chaque opération logistique des itinéraires possibles, chaque itinéraire possible étant les chemins entre une position initiale dans le réseau de transport de la plateforme affectée à l'opération logistique correspondante, la zone de transfert correspondant au point de départ, la zone de transfert correspondant au point d'arrivée et une position finale dans le réseau de transport de la plateforme affectée à l'opération logistique correspondante, en utilisant les données indicatives d'un temps de parcours, de manière à réduire un écart entre des horaires des itinéraires possibles et les contraintes de temps de l'opération logistique,
- déterminer pour chaque itinéraire possible, en utilisant les données indicatives d'une énergie consommée pour parcourir les chemins de l'itinéraire possible correspondant, une énergie consommée pour parcourir l'itinéraire possible correspondant,
- sélectionner l'itinéraire pour chaque opération logistique parmi les itinéraires possibles.

On entend par opération logistique, le transport d'une cargaison, par exemple un container, d'un point de départ à un point d'arrivée.

On entend par contraintes de temps d'une opération logistique par exemple, une date et une heure de départ souhaitée et une date et une heure d'arrivée souhaitée. Une contrainte de temps d'une opération logistique pourra aussi être, par exemple, une plage horaire de chargement de cargaison.

On entend par plateforme de transport autonome, un véhicule de transport de cargaison dont le pilotage est automatique. Une telle plateforme de préférence transporte également l'énergie nécessaire à son déplacement.

On entend par chemins entre des points stratégiques, par exemple, des segments d'une représentation d'un réseau en étoile ou d'un réseau en grille, les points stratégiques étant des nœuds entre les segments.

On entend par position initiale d'une plateforme dans le réseau de transport, par exemple, un entrepôt de stockage de plateformes de transport autonomes ou une zone de recharge en énergie de plateforme de transport autonome ou encore un point d'arrivée d'une opération logistique précédente.

On entend par position finale d'une plateforme dans le réseau de transport, par exemple, un entrepôt de stockage de plateformes de transport autonomes ou une zone de recharge en énergie de plateforme de transport autonome ou encore un point de départ d'une opération logistique suivante.

On entend par zone de transfert, un point stratégique de la représentation du réseau de transport correspondant à l'emplacement d'une zone adaptée au chargement ou au déchargement de la cargaison d'une des plateformes de transport autonome.

On entend par données indicatives d'un temps de parcours et d'une énergie consommée, une distance et éventuellement d'autres données telle que par exemple, une vitesse autorisée, une pente, un rayon de courbure et une indication de blocage ainsi qu'un temps d'attente associé au blocage.

De telles dispositions permettent, lors de la gestion des opérations logistiques de planifier et d'optimiser la réalisation des opérations logistiques en utilisant des plateformes de transport autonome dont des contraintes d'autonomie sont déterminantes pour les opérations logistiques. On entend par des contraintes d'autonomie, par exemple une distance parcourue, avant de nécessiter une recharge, relativement faible en comparaison d'autres plateformes de transport ou encore un temps de recharge relativement long en comparaison d'autres plateformes de transport.

Dans des modes particuliers de mise en œuvre l'invention peut comporter en outre l'une ou plusieurs des caractéristiques suivantes, prises isolément ou selon toutes les combinaisons techniquement possibles.

Selon un mode de réalisation, la planification des opérations logistiques est réalisée en minimisant une énergie totale consommée pour effectuer les opérations logistiques, l'énergie totale consommée étant la somme des énergies consommées pour parcourir les itinéraires.

On entend par optimisation de l'énergie total consommée, par exemple le fait de réduire le plus possible cette énergie totale consommée. Cela pourra être fait en priorisant ce critère de sélection d'itinéraire parmi les différents itinéraires possibles.

L'optimisation de l'énergie totale consommée permet de réduire la quantité d'énergie nécessaire pour assurer les opérations logistiques en utilisant le procédé selon l'invention.

Selon un mode de réalisation, la planification des opérations logistiques est réalisée en optimisant une durée de réalisation des opérations logistiques de manière à effectuer chaque itinéraire le plus rapidement possible.

L'optimisation de la durée de réalisation des opérations logistiques permet d'assurer les opérations logistiques d'une manière très réactive ce qui augmente le confort des bénéficiaires de ces opérations.

Selon un mode de réalisation, l'affection des plateformes de transport autonomes à chaque opération logistique est réalisée en équilibrant une distribution d'une charge de travail des plateformes de transport autonomes.

Equilibrer la distribution de la charge de travail des plateformes de transport autonomes permet d'uniformiser l'usure et la fatigue des plateformes et d'ainsi augmenter la durée de vie des plateformes, d'éviter la surcharge d'une plateforme et de simplifier l'organisation des maintenances.

Selon un mode de réalisation, les points stratégiques comprennent également des zones de recharge, dans lequel la représentation des plateformes comporte également pour chaque plateforme un niveau d'autonomie en fonction du temps et dans lequel la planification comporte également une sous étape d'adaptation, pour chaque opération logistique, des itinéraires pour ajouter une phase de recharge à une zone de recharge si l'énergie consommé pour parcourir l'itinéraire correspondant dépasse le niveau d'autonomie de la plateforme de transport autonome affectée à l'opération logistique correspondante.

On entend par zones de recharge, une station permettant à une ou plusieurs plateformes de transport autonome de recharger une batterie ou un réservoir avec une énergie utilisée par la plateforme de transport autonome pour se déplacer.

L'énergie utilisée pourra être une énergie électrique ou un carburant traditionnel ou encore un carburant alternatif tel que l'hydrogène par exemple.

La prise en compte des zones de recharge dans la représentation du réseau de transport et dans la sous étape d'adaptation de l'itinéraire permet de planifier des recharges des plateformes de transport autonome, des durées de recharges, et des adaptations d'itinéraires. De cette manière, la planification des opérations logistiques sera plus robuste, c'est-à-dire moins susceptible de changer au dernier moment.

Selon un mode de réalisation, chaque opération logistique comporte également une caractéristique d'une cargaison, dans lequel les données indicatives d'une énergie consommée pour parcourir les chemins sont en fonction de la caractéristique d'une cargaison, et dans lequel l'énergie consommé pour parcourir les itinéraires est déterminée en utilisant la caractéristique d'une cargaison de l'opération logistique correspondante.

On entend par caractéristique d'une cargaison, par exemple, un poids de cargaison ou un indicateur de la trainée supplémentaire provoquée par la cargaison. Cette caractéristique pourra influencer l'énergie consommé par la plateforme de transport autonome transportant la cargaison correspondante pour certains chemins. Par exemple un chemin présentant une pente positive, aussi appelée montée, significative, nécessitera plus d'énergie si la cargaison est lourde.

De telles dispositions permettent au procédé selon l'invention de réaliser une planification des opérations logistiques en utilisant une estimation de l'énergie consommé plus proche de l'énergie consommé réelle. La gestion des opérations logistiques proposée par l'invention sera ainsi plus robuste.

Selon un mode de réalisation, les données indicatives d'un temps de parcours des chemins sont en fonction du temps afin que les données indicatives d'un temps de parcours des chemins prennent en compte l'influence de variations d'encombrement des chemins.

Selon un mode de réalisation, la représentation du réseau de transport est périodiquement mise à jour en utilisant des données représentatives de l'état du réseau de transport au moment de la mise à jour et des données représentatives de l'état du réseau de transport pendant une durée d'estimation postérieure au moment de la mise à jour.

La mise à jour périodique de la représentation du réseau de transport permet de prendre en compte les dernières évolutions du réseau de transport représenté, par exemple, la modification du sens de circulation sur un chemin ou l'encombrement ou le blocage d'un chemin.

On entend par durée d'estimation postérieure au moment de la mise à jour, une durée ou période future pendant laquelle une estimation ou une simulation de l'évolution de l'état du réseau de transport est réalisée. Cette estimation pourra être, par exemple, une prévision d'encombrement lié à la circulation ou une prévision de blocages liés à des travaux prévus.

De telles dispositions permettent d'augmenter encore la robustesse de la gestion des opérations logistiques en affinant la planification réalisée par le procédé selon l'invention.

Selon un mode de réalisation, la représentation des plateformes de transport autonome est périodiquement mise à jour en utilisant des données représentatives de l'état des plateformes au moment de la mise à jour.

De telles dispositions permettent d'augmenter encore la robustesse de la gestion des opérations logistiques en affinant la planification réalisée par le procédé selon l'invention.

Selon un mode de réalisation, le réseau de transport est un réseau ferré.

Selon un mode de réalisation, l'emplacement de chaque zone de transfert de la représentation du réseau de transport est déterminé en fonction d'une proximité avec un réseau routier.

Déterminer l'emplacement des zones de transfert en fonction d'une proximité avec un réseau routier permet d'adapter particulièrement le procédé selon l'invention à la gestion d'opérations logistiques impliquant des chargements et des déchargements de cargaison depuis ou vers des moyens de transport routier.

Selon un mode de réalisation, chaque plateforme de transport autonome comporte un système de chargement et de déchargement de cargaison.

Un système de chargement et de déchargement embarqué sur chaque plateforme autonome permet une grande flexibilité dans l'emplacement des zones de transfert. Le transfert de cargaison pouvant être effectué sans nécessiter que la zone de transfert dispose de système de chargement indépendant tel qu'une grue par exemple.

Selon un deuxième aspect, l'invention concerne un système agencé pour réaliser la gestion et l'optimisation d'opérations logistiques utilisant des plateformes de transport autonome circulant dans un réseau de transport, chaque opération logistique comportant, un point de départ, un point d'arrivée et des contraintes de temps, le système comportant :

- des moyens pour construire une représentation du réseau de transport, la représentation du réseau comportant des chemins entre des points stratégiques du réseau de transport, les points stratégiques comprenant des zones de transfert, chaque chemin ayant des données indicatives d'un temps de parcours et d'une énergie consommé pour parcourir le chemin correspondant,
- des moyens pour construire une représentation des plateformes de transport autonomes, la représentation des plateformes comportant, en fonction d'un temps, pour chaque plateforme, une position dans le réseau de transport,
- des moyens pour planifier les opérations logistiques afin d'établir pour chaque opération logistique un itinéraire et une plateforme de transport autonome, la planification étant un processus itératif, les moyens pour planifier étant configurés pour:
- affecter une plateforme de transport autonome à chaque opération logistique en utilisant les positions dans le réseau de transport de la représentation des plateformes et la zone de transfert correspondant au point de départ,

- déterminer pour chaque opération logistique des itinéraires possibles, chaque itinéraire possible étant les chemins entre une position initiale dans le réseau de transport de la plateforme affectée à l'opération logistique correspondante, la zone de transfert correspondant au point de départ, la zone de transfert correspondant au point d'arrivée et une position finale dans le réseau de transport de la plateforme affectée à l'opération logistique correspondante, en utilisant les données indicatives d'un temps de parcours, de manière à réduire un écart entre des horaires des itinéraires possibles et les contraintes de temps de l'opération logistique,
- déterminer pour chaque itinéraire possible, en utilisant les données indicatives d'une énergie consommée pour parcourir les chemins de l'itinéraire possible correspondant, une énergie consommée pour parcourir l'itinéraire possible correspondant,
- sélectionner l'itinéraire pour chaque opération logistique parmi les itinéraires possibles.

On entend par des moyens pour construire une représentation du réseau de transport et des moyens pour construire une représentation des plateformes de transport autonomes, par exemple, un serveur comportant au moins un dispositif de calcul, pouvant être un processeur, une mémoire électronique et des liens de communications avec des bases de données contenant des informations concernant le réseau de transport et une flotte de plateformes de transport autonomes et éventuellement avec des capteurs équipant le réseau de transport et les plateformes de transport autonomes.

On entend par des moyens pour planifier les opérations logistiques, par exemple, un serveur comportant au moins un dispositif de calcul, pouvant être un processeur, une mémoire électronique et des interfaces de communication permettant de recevoir les besoins de chaque opération logistique et permettant d'accéder aux représentations du réseau de transport et des plateformes de transport autonomes.

De telles dispositions permettent au système selon le deuxième aspect de l'invention de mettre en œuvre la gestion et l'optimisation des opérations logistiques utilisant des plateformes de transport autonomes.

Selon un troisième aspect, l'invention concerne un support non transitoire lisible par ordinateur comprenant des instructions qui, lorsqu'elles sont exécutées par au moins un processeur d'un dispositif de calcul, conduisent le dispositif de calcul à mettre en œuvre le procédé selon l'un des modes de réalisation du premier aspect de l'invention.

**Présentation des figures**

L'invention sera mieux comprise à la lecture de la description suivante, donnée à titre d'exemple nullement limitatif, et faite en se référant aux figures:

[Fig. 1] une représentation schématique d'un exemple du procédé selon le premier aspect de l'invention,
[Fig. 2] une représentation schématique d'un exemple de planification selon le premier aspect de l'invention,
[Fig. 3] un exemple d'une représentation du réseau de transport,
[Fig. 4] une représentation schématique d'un exemple d'itinéraires,

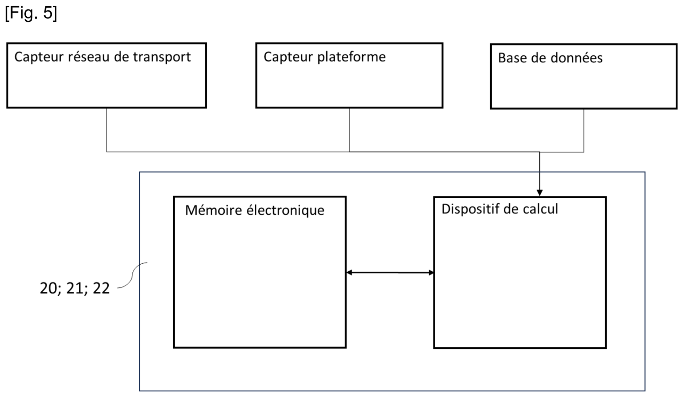

[Fig. 5] une représentation schématique d'un exemple du système selon le deuxième aspect de l'invention.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée de l'invention**

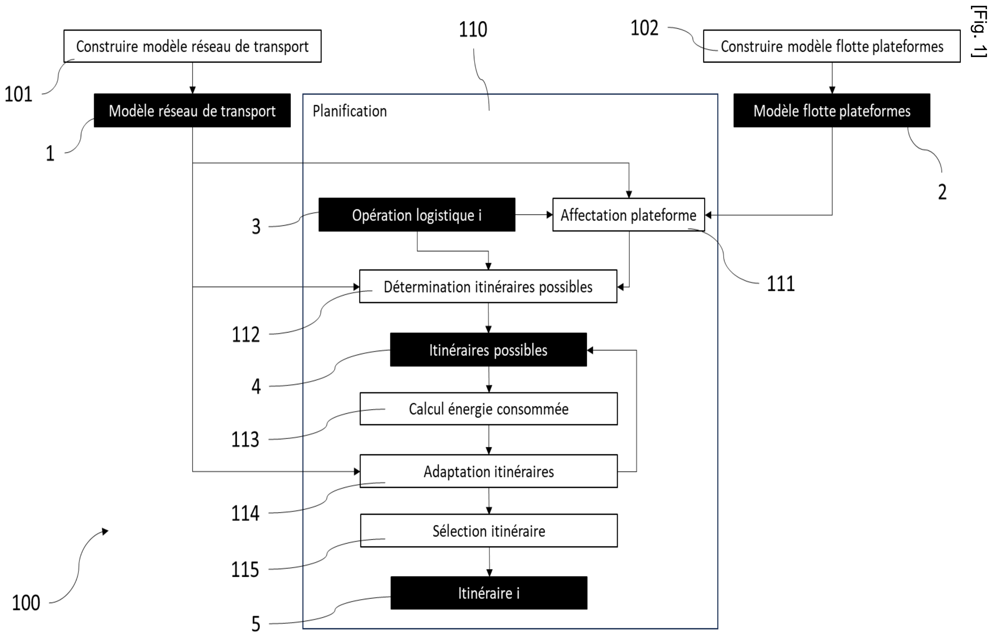

La [Fig. 1] est une représentation schématique d'un exemple du procédé selon le premier aspect de l'invention. Le procédé 100 est mis en œuvre par un ordinateur. Il permet de gérer et d'optimiser des opérations logistiques utilisant des plateformes de transport autonomes. Les plateformes de transport autonomes circulent dans un réseau de transport. Le réseau de transport pourra être un réseau ferré, routier, fluvial ou un autre type de réseau de circulation. Les opérations logistiques 3 concernent le transport de fret, chaque opération est initiée par une demande formulée par un opérateur logistique. La demande indique, une cargaison, son point de départ souhaité, son point d'arrivée souhaité ainsi que des contraintes de temps telles que les dates et heures souhaitées pour le départ et éventuellement pour l'arrivée. Les contraintes de temps pourront également être une plage horaire ou fenêtre temporelle pendant laquelle la cargaison pourra être chargée sur une des plateformes de transport autonome au point de départ.

La demande indique éventuellement des caractéristiques de la cargaison telles qu'une masse, un type de conteneur et un centre de gravité. Une plateforme de transport autonome est un véhicule de transport de cargaison dont le pilotage pourra être automatique et dont l'énergie utilisée par le déplacement est embarquée par la plateforme contrairement, par exemple, à un train alimenté par une caténaire. La plateforme de transport autonome pourra être un véhicule électrique disposant de batterie ou tout autre véhicule dont l'autonomie est réduite en comparaison de camions et trains diesels actuels.

Le procédé selon l'invention comprend une étape de construction 101 d'une représentation du réseau de transport 1.

Cette représentation du réseau de transport 1 est un modèle numérique comportant des informations concernant le réseau de transport pertinentes pour la planification des opérations logistiques empruntant ce réseau de transport. La représentation du réseau de transport 1 pourra être, par exemple, un graphe orienté comportant des nœuds et segments. Un nœud de la représentation du réseau de transport est aussi appelé point stratégique dans le présent texte. Un point stratégique pourra correspondre à une intersection du réseau de transport ou à un autre type d'emplacement d'intérêt particulier. Les emplacements d'intérêt particulier du réseau de transport, correspondant à des points stratégiques de la représentation du réseau de transport, pourront être des emplacements permettant le transfert de cargaison depuis ou vers une des plateformes de transport autonomes (zones de transfert) ou encore des points de recharge en énergie des plateformes de transport autonomes ou encore des points de stockage ou de maintenance des plateformes de transport autonomes. Un segment de la représentation du réseau de transport est aussi appelé chemin dans le présent texte. Un chemin correspond à une voie de circulation du réseau de transport entre deux points stratégiques adjacents dans le réseau de transport.

Le modèle du réseau de transport comprend, pour chaque chemin, des données pertinentes pour la planification des opérations logistiques empruntant le réseau de transport. Ces données pertinentes incluent des données indicatives d'un temps nécessaire pour qu'une des plateformes de transport autonomes parcoure le chemin correspondant et des données indicatives d'une énergie consommée par une des plateformes de transport autonomes pour parcourir le chemin correspondant. Ces données indicatives sont a minima une distance et pourront également comporter une vitesse, une pente du chemin, et des rayons de courbures des éventuelles courbes présentées par le chemin.

Le procédé représenté comporte une également étape de construction 102 d'un modèle numérique de la flotte de plateformes de transport autonomes 2.

Ce modèle numérique est une représentation des plateformes de transport autonomes 2. Cette représentation 2 comprend notamment une position de chaque plateforme en fonction du temps. Cette représentation 2 permettra de simuler les déplacements des plateformes dans le réseau de transport. La représentation des plateformes de transport autonome 2 peut également comporter des informations concernant chaque plateforme tel qu'un statut de la plateforme, un niveau d'autonomie et un kilométrage. Le statut d'une des plateformes pouvant être, par exemple, disponible, en mission ou nécessitant une maintenance.

Une fois construites les représentations (1,2) du réseau de transport et de la flotte de plateformes de transport autonomes, la planification 110 de la réalisation des opérations logistiques est réalisée de manière itérative.

Lors de la réception d'une demande de nouvelle opération logistique, chaque opération logistique est replanifiée en priorisant la réalisation des opérations logistiques précédemment reçues. Si la planification aboutit à une solution, la dernière demande reçue est confirmée, sinon des ajustements sur les points de départ et/ou d'arrivée et/ou sur les contraintes de temps, pourront être proposés à l'opérateur logistique effectuant la demande d'une nouvelle opération logistique. L'opérateur pourra ensuite accepter les ajustements ou annuler sa demande. Des demandes de nouvelles opérations logistiques sont possibles jusqu'à une certaine durée, par exemple une journée, avant le début des opérations logistiques. Les itinéraires et les affectations sont ensuite figés pour éviter de modifier la planification juste avant ou pendant la réalisation des opérations logistiques.

Replanifier l'ensemble des opérations logistiques lors de la réception de chaque nouvelle demande d'opération logistique, si les nouvelles demandes ne sont pas reçues tardivement, permet de planifier de manière optimale selon des critères sélectionnés en tenant compte de l'ensemble des besoins en opération logistique.

Lors de la planification 110 le point de départ et le point d'arrivée de chaque opération logistique sont chacun associés à une zone de transfert de la représentation du réseau de transport. La planification 110 conduit à définir un itinéraire et à affecter une plateforme de transport autonome pour chaque opération.

La planification 110 comporte une sous étape d'affection 111 d'une plateforme de transport autonome à chaque opération logistique. Cette affectation 111 est réalisée en utilisant les représentations du réseau de transport et des plateformes de transport autonomes. Cette affectation pourra, par exemple, être réalisée en triant les opérations logistiques par ordre chronologique de date et heure de départ et en affectant à chacune des opérations logistiques la plateforme de transport autonome disponible la plus proche du point de départ à la date et heure de départ souhaitée.

Les sous étapes suivantes sont un exemple d'affection des plateformes de transport autonome aux opérations logistiques :

1. **Triage et sélection des opérations logistiques** : Les opérations sont triées en fonction de l'heure de début pour garantir qu'elles sont traitées dans l'ordre chronologique. Cela permet de minimiser le risque qu'une opération urgente ne soit ignorée.

2. **Filtrage des plateformes compatibles** : Pour chaque opération, filtrer les plateformes disponibles selon plusieurs critères :

◦ **Temps de trajet** : La plateforme doit être capable de rejoindre la zone de transfert correspondant au point de chargement dans une fenêtre temporelle de chargement, en choisissant l'itinéraire le plus rapide en tenant compte d'un temps de trajet depuis son emplacement initial jusqu'au point de départ, et de temps d'attentes causés par exemple par des blocages ou des chemins occupés.

◦ **Autonomie** : vérification que la plateforme dispose de suffisamment d'autonomie pour réaliser le trajet sans avoir besoin de recharge immédiate. Si nécessaire, calcul d'un arrêt à une station de recharge.

3. **Triage des plateformes par temps** : Une fois les plateformes compatibles identifiés, elles sont triées en fonction du temps total (temps de trajet + éventuelles attentes dues aux chemins bloqués). Cette approche permet de prioriser les plateformes qui peuvent accomplir l'opération dans les délais les plus courts.

4. Optimisation des itinéraires en utilisant un algorithme de recherche de chemin, par exemple un algorithme de Dijkstra, pour garantir que les plateformes prennent toujours le chemin le plus rapide, ce qui assure une gestion fluide des opérations et une utilisation optimale des ressources.

Selon un mode de réalisation, l'affectation d'une des plateformes de transport autonomes à chaque opération logistique est réalisée en tenant compte d'une charge de travail de chacune des plateformes. Cette charge de travail pourra être associée, par exemple, à un kilométrage de chacune des plateformes. Tenir compte de la charge de travail de chaque plateforme lors de l'affectation permet de distribuer cette charge de travail sur l'ensemble de la flotte et d'ainsi réduire et étaler des besoins en maintenance.

La planification 110 comporte également une étape de détermination 112 des itinéraires possibles pour chaque opération logistique. Les itinéraires possibles sont déterminés en utilisant la représentation du réseau de transport de manière à établir la succession des chemins et des points stratégiques à emprunter par la plateforme de transport autonome affectée à l'opération logistique correspondante. Un algorithme de recherche de chemin tel que l'algorithme de Dijkstra pourra être utilisé pour cette détermination 112. Les itinéraires possibles sont déterminés de manière à relier un emplacement initial et un emplacement final de la plateforme affectée en passant par le point stratégique correspondant au point de départ puis par le point stratégique correspondant au point d'arrivée. Un temps de réalisation de chaque itinéraire possible est déterminé en utilisant des données indicatives d'un temps de parcours des chemins. Ces données sont présentes dans la représentation du réseau de transport. Les données indicatives d'un temps de parcours pourront être des distances, des vitesses autorisées et des temps d'attente potentiels liés à des blocages ou à des chemins occupés.

Selon un mode de réalisation, les données indicatives d'un temps de parcours des chemins sont variables en fonction du temps afin de représenter des variations d'encombrement des chemins correspondant. Un chemin en effet peut être encombré, ce qui entraîne une réduction de vitesse, ou bloqué pendant un certain temps, ce qui engendre un temps d'attente.

Le temps de réalisation de chaque itinéraire est déterminé de préférence en tenant compte de temps de chargement et de déchargement aux zones de transfert. La détermination du temps de réalisation conduit à établir des horaires de l'itinéraire, notamment, la date et l'heure de chargement de la cargaison de l'opération logistique et la date et l'heure du déchargement de la cargaison. Les itinéraires possibles sont calculés de manière à limiter l'écart entre les horaires établis pour les différents itinéraires et les contraintes de temps des opérations logistiques correspondantes.

En pratique, il est très difficile d'assurer une correspondance parfaite entre les contraintes de temps reçues lors de la demande de prise en charge de l'opération logistique et les horaires des itinéraires possibles. Afin de s'affranchir de cette problématique, les contraintes horaires sont exprimées en plage horaire afin de laisser une latitude d'ajustement dans ces plages horaires pour la planification des opérations logistiques. Les horaires précis définitifs dans ces plages horaires pourront ensuite être figés à une durée prédéfinie, par exemple 24h ou une autre durée, avant le début de la réalisation des opérations logistiques planifiées.

La planification 110 comporte ensuite, pour chaque itinéraire possible la détermination 113 de l'énergie consommée pour parcourir l'itinéraire possible correspondant. L'énergie consommée pour parcourir l'itinéraire possible correspondant permet de s'assurer de la capacité de la plateforme de transport autonome à réaliser l'itinéraire. Le calcul de l'énergie consommée 113 pour parcourir un des itinéraires pourra être la somme des énergies consommées pour parcourir les chemins compris dans l'itinéraire. L'énergie consommée pour parcourir un des chemins est déterminée en utilisant les données indicatives d'une énergie consommée contenues dans la représentation du réseau de transport. Ces données indicatives comportent a minima une distance et peuvent également comporter une pente du chemin, et un rayon de courbure du chemin. Un rayon de courbure important peut amener les plateformes de transport autonomes parcourant le chemin à ralentir puis à accélérer ce qui impacte la consommation d'énergie par rapport au maintien d'une vitesse constante.

En considérant une plateforme de transport autonome terrestre équipée de batteries électriques, l'énergie consommée pour parcourir un chemin pourra être déterminée en tenant compte de phase de propulsion ou traction et de phase de freinage régénératif. L'énergie consommée pour parcourir un chemin pourra, par exemple être calculée en utilisant les équations suivantes :

[Math. 1]

$$E_{cons} = \frac{E_{batt}}{d}$$

Avec $E_{cons}$ en Watt heure par mètre (Wh/m) , $E_{batt}$ en Watt Heure (Wh) et d en mètre (m).

[Math. 2]

$$E_{batt} = \int_0^T P_{batt}(t)\, dt$$

T étant le temps en heures (h) pour parcourir un élément fini du chemin et $P_{batt}$ une puissance en Watt (W). Avec

[Math. 3]

$$P_{batt} = \begin{cases} P_{out} \ en\ traction \\ P_{in} \ en\ freinage \end{cases}$$

$P_{out}$ pouvant être estimée de la manière suivante :

[Math. 4]

$$P_{out} = \frac{P_{wheel}}{n}$$

n étant le rendement d'un système de propulsion des plateformes de transport autonomes et $P_{wheel}$ étant la puissance développée par les roues, déterminée de la manière suivante :

[Math. 5]

$$P_{wheel} = F_{wheel} v$$

$$F_{wheel} = F_{rr} + F_{ad} + F_{rg} + F_{accel}$$

$$F_{rr} = C_r m\, g\cos(\alpha)$$

$$F_{ad} = \frac{\rho_a}{2} C_d A_f v^2$$

$$F_{rg} = m\, g\sin(\alpha)$$

$$F_{accel} = m\, \delta \frac{dv}{dt}$$

Avec

v : la vitesse de la plateforme sur l'élément fini considéré
$C_r$ : un coefficient de résistance au roulement
m : la masse de la plateforme et de son éventuel chargement
g : l'accélération gravitationnelle

$\alpha$ : la pente de l'élément fini considéré

$\rho_a$ : la densité de l'air

$C_d$ : le coefficient de trainée aérodynamique

$A_f$ : la surface frontale de la plateforme

$\delta$ : une constante d'inertie de la plateforme

$P_{in}$ pouvant être estimée de la manière suivante :

[Math. 6]

$$P_{in} = k\,P_{regen}\,;0 < k < 1$$

Avec k un coefficient de récupération d'énergie et $P_{regen}$ une puissance de freinage.

Ces équations permettent une estimation fine de l'énergie consommée par une plateforme pour parcourir un chemin. Elles pourront également être utilisées avec des simplifications si moins d'informations sont disponibles pour réaliser le calcul. Par exemple, une énergie par mètre $E_{cons}$ moyenne pourra être considérée afin de pouvoir déterminer rapidement et simplement une estimation de l'énergie consommée pour parcourir un itinéraire en ne nécessitant, pour réaliser l'estimation, que la distance à parcourir.

Selon un mode de réalisation, une caractéristique de la cargaison est indiquée par l'opérateur logistique lors de la demande de prise en charge d'une nouvelle opération logistique. Cette caractéristique pourra, par exemple être, un poids de la cargaison qui permettra d'affiner le calcul de l'énergie consommée en contribuant aux paramètres de masse de la plateforme et de son éventuel chargement et à la constante d'inertie de la plateforme présent dans l'équations [Math. 5].

Selon un mode de réalisation, la représentation du réseau de transport comporte également des points stratégiques correspondant à des zones permettant la recharge des plateformes de transport de transport autonomes. Si l'énergie nécessaire à la réalisation d'un itinéraire possible est supérieure à l'autonomie de la plateforme affectée à l'opération logistique pour laquelle l'itinéraire possible est déterminé, une étape d'adaptation de l'itinéraire possible est réalisée afin d'ajouter un passage à une zone de recharge tout en prenant en compte le temps nécessaire à la recharge de la plateforme dans les horaires de l'itinéraire.

Une fois l'énergie nécessaire à la réalisation des itinéraires possibles déterminées, l'itinéraire adopté pour l'opération logistique en cours de planification est sélectionné. Plusieurs critères pourront être utilisés pour sélectionner l'itinéraire parmi les itinéraires possibles, par exemple, l'itinéraire nécessitant le moins d'énergie, l'itinéraire dont les horaires sont les plus proches des contraintes de temps de l'opération logistique, l'itinéraire permettant une arrivée de la cargaison au point d'arrivée la plus rapide ou encore une combinaison de ces critères.

Selon un mode de réalisation, la représentation du réseau de transport est mise à jour périodiquement à partir, par exemple, d'une base de données ou de capteurs permettant de refléter l'état du réseau de transport tel qu'il est connu ou mesuré au moment de la mise à jour. De cette manière, la planification pourra être réalisée en tenant compte d'éventuels changements de l'état du réseau de transport tel que, par exemple, des travaux, des encombrements et des accidents. La mise à jour de la représentation du réseau de transport pourra également comporter des données issues de simulation d'un état prévisionnel à venir du réseau de transport. La simulation d'un état prévisionnel à venir du réseau de transport pourra comporter la prise en compte de l'utilisation du réseau par d'autres véhicules que les plateformes de transport autonomes.

Selon un mode de réalisation, la représentation des plateformes de transport autonome est mise à jour périodiquement afin de tenir compte d'éventuels changements dans la flotte de plateforme tel que la panne d'une des plateformes ou l'ajout d'une nouvelle plateforme à la flotte.

La planification 110 itérative des opérations logistiques permet de déterminer différents itinéraires possibles et différentes affectations possibles, de comparer les différentes solutions et leurs énergies consommées et d'adopter pour chaque opération logistique l'affectation et l'itinéraire permettant d'optimiser la gestion des opérations logistiques notamment vis-à-vis de l'énergie consommée. Selon un mode de réalisation, la solution retenue est celle présentant la plus faible énergie consommée totale. L'énergie consommée totale est la somme des énergies consommées prévisionnelles nécessaire à la réalisation de l'ensemble des opérations logistiques.

Selon un mode de réalisation, la solution retenue est celle présentant la meilleure réactivité. C'est à dire la solution permettant de réaliser chacune des opérations logistiques le plus rapidement possible.

Selon un mode de réalisation, la solution retenue est celle permettant de répartir une charge de travail, assimilée par exemple au nombre de kilomètre à parcourir, le plus équitablement possible entre les plateformes de transport autonomes constituant la flotte. De cette manière, les risques de pannes sont limités et une maintenance de la flotte pourra être plus facilement assurée.

Une combinaison de ces différentes approches de sélection d'une solution de planification pourra également être adoptée notamment en priorisant ou en pondérant ces approches les unes par rapport à autres.

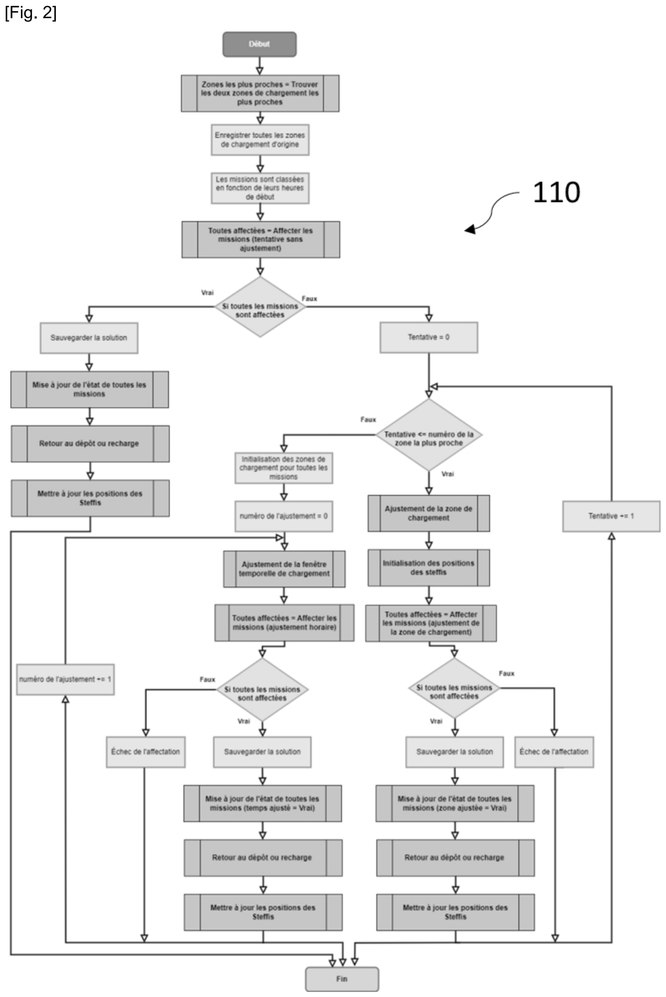

La [Fig. 2] est une représentation schématique d'un exemple de planification selon le premier aspect de l'invention. Dans cet exemple de réalisation de l'étape de planification 110, deux types d'ajustements sont possibles et pourront être proposés à l'opérateur logistique qui réalise une demande de prise en charge de nouvelle opération logistique. La planification 110 pourra comporter une étape d'ajustement de la zone de transfert correspondant au point de départ de l'opération logistique. La planification 110 pourra comporter une étape d'ajustement d'une plage temporelle présente dans les contraintes de temps de la demande d'opération logistique en cours de traitement. Une étape de retour à un entrepôt de stockage de plateforme ou de retour à une zone de recharge est représentée dans cet exemple de planification 110 selon le premier aspect de l'invention.

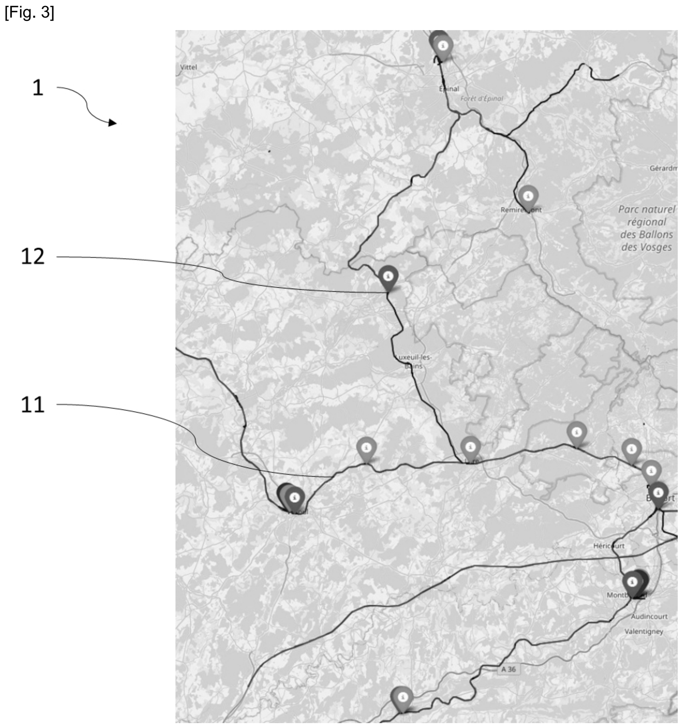

La [Fig .3] est un exemple d'une représentation du réseau de transport 1. Plusieurs points stratégiques 12 sont représentés, ces points stratégiques pourront être des zones de transfert, des zones de recharge ou encore des entrepôts de stockage ou maintenance de plateformes de transport autonomes. Les points stratégiques sont reliés par des chemins 11. Les chemins pourront être modélisés numériquement comme étant une succession de points discrets, chaque point discret pourra comporter des caractéristiques telles que, par exemple, une latitude, une longitude, une distance avec le point précédent du chemin, une pente et une vitesse autorisée. La concaténation des caractéristiques de chaque point discret d'un chemin pourra constituer les données indicatives d'un temps de parcours et d'une énergie consommée pour parcourir le chemin. Le réseau de transport représenté sur la [Fig. 3] est un réseau de transport ferré. Les zones de transfert ont été déterminées en fonction d'une proximité avec un réseau routier de manière à permettre de facilement transférer une cargaison entre un camion empruntant le réseau routier et une des plateformes de transport autonomes empruntant le réseau ferré.

Un réseau ferré, aussi appelé réseau ferroviaire est un système structuré autour de plusieurs voies qui pourront être représentées numériquement par des chemins et de nombreux nœuds. Certains nœuds correspondent à des intersections ou bifurcations, qui permettent aux voies de se croiser ou de se séparer. Grâce à cette structure de nœuds, il est possible d'estimer avec précision les distances entre chaque paire de nœuds en respectant la direction de circulation.

Un graphe orienté modélisant ce réseau ferroviaire pourra contenir des milliers de nœuds, dont certains ont été sélectionnés en tant que points stratégiques car ils jouent un rôle essentiel dans la planification des opérations logistiques.

La représentation du réseau ferré pourra comporter des cantons, et la détermination 112 des itinéraires possibles pourra tenir compte des cantons et de leurs occupations pour estimer les horaires de chaque itinéraire possible. On entend par cantons, un système permettant d'assurer une certaine distance de sécurité entre différents véhicules, pouvant être des plateformes de transport autonomes, circulant dans un réseau ferré.

Selon un mode de réalisation, chaque plateforme de transport autonome comporte un système de chargement et de déchargement de cargaison. De cette manière les zones de transfert pourront correspondre à des emplacements du réseau de transport auxquels aucun équipement spécifique de transfert de cargaison n'est installé. Cela apporte une plus grande flexibilité dans la réalisation d'opérations logistiques utilisant les plateformes de transport autonomes.

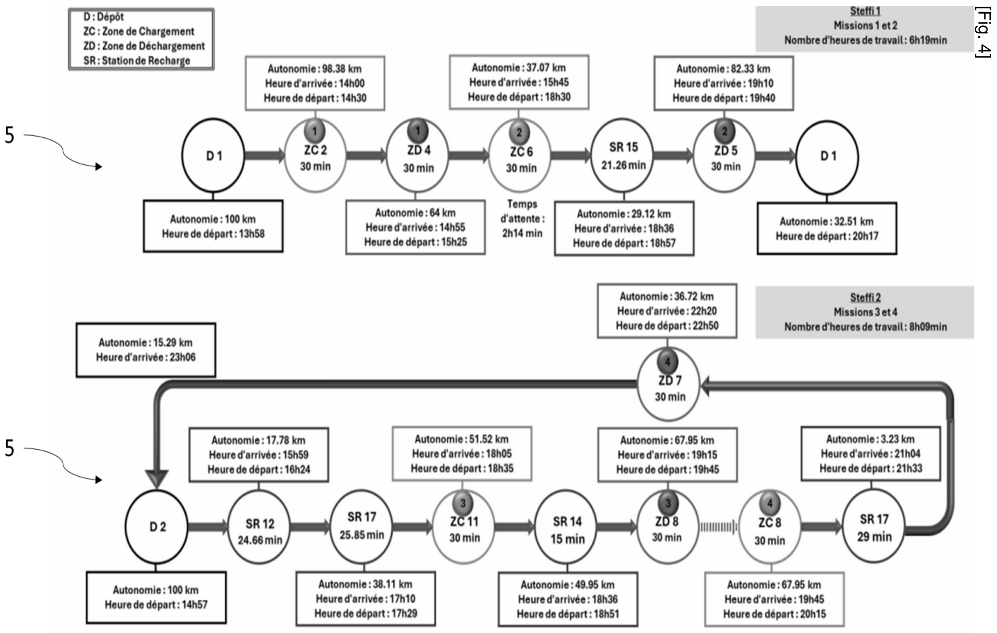

La [Fig .4] est une représentation schématique d'un exemple d'itinéraires 5 issus du procédé 100 selon l'invention. Ces itinéraires 5 permettent de prendre en charge la réalisation de quatre opérations logistiques en utilisant deux plateformes de transport autonomes appelées « Steffi » dans la [Fig. 4]. Pour chacun des itinéraires, les horaires et un niveau d'autonomie sont indiqués. Des durées de chargement et de déchargement sont prévues aux zones de transfert. Des durées de recharge sont également prévues aux zones de recharge. Dans cet exemple d'itinéraire, des positions initiales et finales des plateformes de transport autonomes sont prévus dans des entrepôts de maintenance. Un nombre d'heures de travail de chaque plateforme de transport autonome pourra également être déterminé et utilisé comme approximation de la charge de travail de chaque plateforme.

Selon des exemples de réalisation du procédé 100, l'adaptation 114 des itinéraires possibles 112 pourra comporter les sous-étapes suivantes :

Prévention de l'autonomie : une contrainte de prévention de l'autonomie pourra être mise en place pour éviter que l'une des plateformes de transport autonome ne dépasse sa limite d'autonomie et ne puisse accomplir l'opération logistique qui lui est affectée sans risque de panne. Cette contrainte pourra également assurer que, après avoir atteint la zone de transfert correspondant au point d'arrivée de l'opération logistique, la plateforme dispose encore de suffisamment d'autonomie pour atteindre une zone de recharge. Si il est déterminé que l'autonomie restante ne permettra pas à la plateforme d'atteindre une zone de recharge après avoir atteint la zone de transfert correspondant au point d'arrivée de l'opération logistique, un arrêt à une zone de recharge avant la zone de transfert est ajouté à l'itinéraire.

Choix des zones de recharge : une sélection des zones de recharge pourra être réalisée pour minimiser l'impact de l'ajout d'un arrêt à une zone de recharge dans l'itinéraire possible en cours d'adaptation. Plusieurs paramètres pourront être pris en compte pour cette sélection, tels que la position en fonction du temps de la plateforme affectée à l'opération logistique pour laquelle l'itinéraire possible a été déterminée, l'autonomie en fonction du temps de la plateforme, l'emplacement des points stratégiques de l'itinéraire possible en cours d'adaptation, une capacité d'accueil de chaque zone de recharge et une vitesse de charge de chaque zone de recharge. Un des objectifs est de limiter l'attente d'une plateforme pour recharger l'énergie utilisée pour son déplacement. Si la zone de recharge, dont l'emplacement est le plus approprié pour être ajoutée à l'itinéraire possible en cours d'adaptation, est indisponible, deux options peuvent être envisagées. Soit l'ajout d'un temps d'attente pour que la zone de recharge devienne disponible, soit la sélection d'une zone de recharge dont l'emplacement est moins approprié. L'option présentant le moins d'impact sur les horaires de l'itinéraire possible sera adoptée.

Selon des exemples de réalisation du procédé 100, la détermination 112 des itinéraires possibles pourra comporter une sous-étape de choix d'un entrepôt de stockage de plateformes de transport autonomes pour la position finale de chaque itinéraire possible. Le choix de l'entrepôt de stockage, aussi appelé dépôt, pourra tenir compte d'une capacité d'accueil de chaque dépôt. Si la capacité d'accueil du dépôt dont l'emplacement est adapté pour l'itinéraire possible est atteinte, un autre dépôt est choisi pour la position finale de l'itinéraire possible correspondant.

La [Fig .5] est une représentation schématique d'un exemple du système selon le deuxième aspect de l'invention. Le système comporte des moyens 20, 21 et 22 pour construire une représentation du réseau de transport, une représentation de la flotte de plateformes de transport autonomes et pour réaliser la planification 110 du procédé selon le premier aspect de l'invention. Les moyens 20, 21 et 22 pourront être distincts ou uniques et partagés pour la réalisation de différentes étapes. Les moyens 21, 21 et 22 sont par exemple un ou plusieurs serveurs informatiques comportant au moins un dispositif de calcul tel qu'un processeur et au moins une mémoire électronique persistante. La mémoire électronique pourra accueillir les représentations du réseau de transport et des plateformes de transport autonomes sous la forme de modèles numériques dynamiques. On entend par modèle numérique dynamique, un modèle numérique dont des paramètres ou variables internes peuvent varier au cours de simulations ou prévisions. Les moyens 20 et 21 pourront comporter des connections numériques avec une ou plusieurs bases de données et avec éventuellement des capteurs équipant les plateformes de transport autonomes et le réseau de transport. Les connections numériques permettent de collecter des informations nécessaires à la construction des représentations du réseau de transport et des plateformes de transport autonomes et, selon certains modes de réalisation, de procéder à des mises à jour périodiques de ces représentations. Les moyens 22 pourront comporter également des connections numériques avec des dispositifs informatiques tel que par exemple un ordinateur personnel ou un téléphone portable à disposition d'un opérateur logistique. Grâce à ces connections numériques les moyens 22 collectent des demandes de prise en charge d'opérations logistiques de la part des opérateurs logistiques. Les demandes de prise en charge d'opération logistiques comportant un point de départ, un point d'arrivée et des contraintes de temps de l'opération logistique correspondante. Les moyens 20, 21 et 22 sont configurés pour mettre en œuvre le procédé 100 selon le premier aspect de l'invention.

Les connections numériques pourront s'établir à travers un réseau de communication de type internet ou d'un autre type particulier.

De telles dispositions permettent au système selon le deuxième aspect de l'invention de réaliser la gestion et l'optimisation d'opérations logistiques utilisant les plateformes de transport autonomes.

L'invention selon un troisième aspect concerne un support non transitoire lisible par ordinateur comprenant des instructions qui, lorsqu'elles sont exécutées par au moins un processeur d'un dispositif de calcul, par exemple un processeur du système selon le deuxième aspect de l'invention, conduise le dispositif de calcul à mettre en œuvre le procédé selon l'un des modes de réalisation du procédé selon le premier aspect de l'invention. On entend par support non transitoire lisible par ordinateur par exemple, une mémoire électronique tel qu'un ou plusieurs disques durs ou SSD ou un autre type de mémoire électronique persistante.

## Revendications

1. Procédé mis en œuvre par ordinateur pour la gestion et l'optimisation d'opérations logistiques utilisant des plateformes de transport autonomes circulant dans un réseau de transport, chaque opération logistique comportant, un point de départ, un point d'arrivée et des contraintes de temps, le procédé comportant les étapes suivantes :

- construire une représentation du réseau de transport, la représentation du réseau de transport comportant des chemins entre des points stratégiques du réseau de transport, les points stratégiques comprenant des zones de transfert, chaque chemin ayant des données indicatives d'un temps de parcours et d'une énergie consommée pour parcourir le chemin correspondant,
- construire une représentation des plateformes de transport autonomes, la représentation des plateformes comportant, en fonction d'un temps, pour chaque plateforme, une position dans le réseau de transport,
- planifier les opérations logistiques afin d'établir, pour chaque opération logistique, un itinéraire et la plateforme de transport autonome qui réalisera l'itinéraire, la planification étant un processus itératif comportant les sous étapes suivantes :

- affecter une plateforme de transport autonome à chaque opération logistique en utilisant les positions dans le réseau de transport de la représentation des plateformes et la zone de transfert correspondant au point de départ,
- déterminer pour chaque opération logistique des itinéraires possibles, chaque itinéraire possible étant les chemins entre une position initiale dans le réseau de transport de la plateforme affectée à l'opération logistique correspondante, la zone de transfert correspondant au point de départ, la zone de transfert correspondant au point d'arrivée et une position finale dans le réseau de transport de la plateforme affectée à l'opération logistique correspondante, en utilisant les données indicatives d'un temps de parcours, de manière à réduire un écart entre des horaires des itinéraires possibles et les contraintes de temps de l'opération logistique,

- déterminer pour chaque itinéraire possible, en utilisant les données indicatives d'une énergie consommée pour parcourir les chemins de l'itinéraire possible correspondant, une énergie consommée pour parcourir l'itinéraire possible correspondant,

- sélectionner l'itinéraire pour chaque opération logistique parmi les itinéraires possibles.

2. Procédé selon la revendication 1 dans lequel la planification des opérations logistiques est réalisée en optimisant une énergie totale consommée pour effectuer les opérations logistiques, l'énergie totale consommée étant la somme des énergies consommées pour parcourir les itinéraires.

3. Procédé selon la revendication 1 dans lequel la planification des opérations logistiques est réalisée en optimisant une durée de réalisation des opérations logistiques de manière à effectuer chaque itinéraire le plus rapidement possible.

4. Procédé selon l'une des revendications précédentes dans lequel l'affection des plateformes de transport autonomes à chaque opération logistique est réalisée en équilibrant une distribution d'une charge de travail des plateformes de transport autonomes.

5. Procédé selon l'une des revendications précédentes, dans lequel les points stratégiques comprennent également des zones de recharge, dans lequel la représentation des plateformes comporte également pour chaque plateforme un niveau d'autonomie en fonction du temps et dans lequel la planification comporte également une sous étape d'adaptation, pour chaque opération logistique, des itinéraires possibles pour ajouter une phase de recharge à une zone de recharge si l'énergie consommée pour parcourir l'itinéraire possible correspondant dépasse le niveau d'autonomie de la plateforme de transport autonome affectée à l'opération logistique correspondante.

6. Procédé selon l'une des revendications précédentes dans lequel chaque opération logistique comporte également une caractéristique d'une cargaison, dans lequel les données indicatives d'une énergie consommée pour parcourir les chemins sont en fonction de la caractéristique d'une cargaison, et dans lequel l'énergie consommée pour parcourir les itinéraires est déterminée en utilisant la caractéristique d'une cargaison de l'opération logistique correspondante.

7. Procédé selon l'une des revendications précédentes dans lequel les données indicatives d'un temps de parcours des chemins sont en fonction du temps afin que les données indicatives d'un temps de parcours des chemins prennent en compte l'influence de variations d'encombrement des chemins.

8. Procédé selon la revendication 7 dans lequel la représentation du réseau de transport est périodiquement mise à jour en utilisant des données représentatives de l'état du réseau de transport au moment de la mise à jour et des données représentatives de l'état du réseau de transport pendant une durée d'estimation postérieure au moment de la mise à jour.

9. Procédé selon l'une des revendications précédentes dans lequel la représentation des plateformes de transport autonome est périodiquement mise à jour en utilisant des données représentatives de l'état des plateformes au moment de la mise à jour.

10. Procédé selon l'une des revendications précédentes dans lequel le réseau de transport est un réseau ferré.

11. Procédé selon la revendication 10 dans lequel l'emplacement de chaque zone de transfert de la représentation du réseau de transport est déterminé en fonction d'une proximité avec un réseau routier.

12. Procédé selon l'une des revendications précédentes dans lequel chaque plateforme de transport autonome comporte un système de chargement et de déchargement de cargaison.

13. Système agencé pour réaliser la gestion et l'optimisation d'opérations logistiques utilisant des plateformes de transport autonomes circulant dans un réseau de transport, chaque opération logistique comportant, un point de départ, un point d'arrivée et des contraintes de temps, le système comportant :

- des moyens pour construire une représentation du réseau de transport, la représentation du réseau comportant des chemins entre des points stratégiques du réseau de transport, les points stratégiques comprenant des zones de transfert, chaque chemin ayant des données indicatives d'un temps de parcours et d'une énergie consommée pour parcourir le chemin correspondant,
- des moyens pour construire une représentation des plateformes de transport autonomes, la représentation des plateformes comportant, en fonction d'un temps, pour chaque plateforme, une position dans le réseau de transport,
- des moyens pour planifier les opérations logistiques afin d'établir pour chaque opération logistique un itinéraire et une plateforme de transport autonome, la planification étant un processus itératif, les moyens pour planifier étant configuré pour :

- affecter une plateforme de transport autonome à chaque opération logistique en utilisant les positions dans le réseau de transport de la représentation des plateformes et le point de transfert correspondant au point de départ,
- déterminer pour chaque opération logistique des itinéraires possibles, chaque itinéraire possible étant les chemins entre la zone de transfert correspondant au point de départ et la zone de transfert correspondant au point d'arrivée, en utilisant les données indicatives d'un temps de parcours, de manière à réduire un écart entre des horaires des itinéraires possibles et les contraintes de temps de l'opération logistique,
- déterminer pour chaque itinéraire possible, en utilisant les données indicatives d'une énergie consommée, une énergie consommée pour parcourir l'itinéraire possible correspondant,
- sélectionner l'itinéraire pour chaque opération logistique parmi les itinéraires possibles.

**14.** Système selon la revendication 13, comprenant également des moyens pour réaliser le procédé selon l'une quelconque des revendications 2 à 12.

**15.** Support non transitoire lisible par ordinateur comprenant des instructions qui, lorsqu'elles sont exécutées par au moins un processeur d'un dispositif de calcul, conduise le dispositif de calcul à mettre en œuvre le procédé selon l'une quelconque des revendications 1 à 12.

[Fig. 1]

[Fig. 2]

[Fig. 3]

1

12

11

[Fig. 4]

[Fig. 5]

| Capteur réseau de transport | Capteur plateforme | Base de données |

20; 21; 22

| Mémoire électronique | Dispositif de calcul |

Europäisches
Patentamt

European
Patent Office

Office européen
des brevets

# RAPPORT DE RECHERCHE EUROPEENNE

Numéro de la demande

EP 25 20 8975

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 385 893 A1 (OCADO INNOVATION LTD [GB]) 10 octobre 2018 (2018-10-10) * alinéas [0069], [0087], [0092], [0161], [0203], [0207], [0265] * ----- | 1-15 | INV. G06Q10/00 |
| X | ABOSULIMAN SHOUGI SULIMAN ET AL: "Routing and scheduling of intelligent autonomous vehicles in industrial logistics systems", SOFT COMPUTING, SPRINGER BERLIN HEIDELBERG, BERLIN/HEIDELBERG, vol. 25, no. 18, 2 mars 2021 (2021-03-02), pages 11975-11988, XP037540845, ISSN: 1432-7643, DOI: 10.1007/S00500-021-05633-4 [extrait le 2021-03-02] * pages 3-8 * ----- | 1-15 | |
| X | WO 2020/073123 A1 (ADVANCED INTELLIGENT SYSTEMS INC [CA]) 16 avril 2020 (2020-04-16) * alinéas [0047], [0093], [0103], [0115], [0116], [0163]; figure 7 * ----- | 1-15 | |

**DOMAINES TECHNIQUES RECHERCHES (IPC)**

G06Q

Le présent rapport a été établi pour toutes les revendications

| Lieu de la recherche | Date d'achèvement de la recherche | Examinateur |
|---|---|---|
| Munich | 17 février 2026 | Flores Sanchez, L |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................................
& : membre de la même famille, document correspondant

EPO FORM 1503 03.82 (P04C02)

# EP 4 730 220 A1

## ANNEXE AU RAPPORT DE RECHERCHE EUROPEENNE
## RELATIF A LA DEMANDE DE BREVET EUROPEEN NO.

EP 25 20 8975

17-02-2026

| Document brevet cité au rapport de recherche | Date de publication | Membre(s) de la famille de brevet(s) | Date de publication |
|---|---|---|---|
| EP 3385893 A1 | 10-10-2018 | AU 2015270518 A1 | 19-01-2017 |
| | | AU 2019203895 A1 | 20-06-2019 |
| | | AU 2019203899 A1 | 20-06-2019 |
| | | AU 2019203901 A1 | 20-06-2019 |
| | | AU 2021209188 A1 | 19-08-2021 |
| | | AU 2023200693 A1 | 09-03-2023 |
| | | AU 2025200972 A1 | 06-03-2025 |
| | | BR 112016028198 A2 | 31-10-2017 |
| | | CA 2950971 A1 | 10-12-2015 |
| | | CA 3210128 A1 | 10-12-2015 |
| | | CL 2016003120 A1 | 08-09-2017 |
| | | CN 106662874 A | 10-05-2017 |
| | | CN 110442130 A | 12-11-2019 |
| | | CN 110442131 A | 12-11-2019 |
| | | CN 110442132 A | 12-11-2019 |
| | | DK 3152712 T3 | 16-12-2024 |
| | | DK 3355255 T3 | 31-10-2022 |
| | | EP 3152712 A2 | 12-04-2017 |
| | | EP 3355255 A1 | 01-08-2018 |
| | | EP 3376450 A1 | 19-09-2018 |
| | | EP 3385893 A1 | 10-10-2018 |
| | | EP 3978394 A1 | 06-04-2022 |
| | | EP 3978395 A1 | 06-04-2022 |
| | | EP 3998565 A1 | 18-05-2022 |
| | | EP 4008654 A1 | 08-06-2022 |
| | | EP 4009258 A1 | 08-06-2022 |
| | | EP 4027283 A1 | 13-07-2022 |
| | | ES 2929505 T3 | 29-11-2022 |
| | | ES 2999136 T3 | 24-02-2025 |
| | | FI 3152712 T3 | 16-12-2024 |
| | | GB 2528568 A | 27-01-2016 |
| | | GB 2565239 A | 06-02-2019 |
| | | GB 2565240 A | 06-02-2019 |
| | | GB 2565241 A | 06-02-2019 |
| | | HR P20221306 T1 | 23-12-2022 |
| | | HR P20241671 T1 | 14-02-2025 |
| | | HU E059988 T2 | 28-01-2023 |
| | | HU E069495 T2 | 28-03-2025 |
| | | IL 263579 A | 31-01-2019 |
| | | IL 263580 A | 31-01-2019 |
| | | IL 263581 A | 31-01-2019 |
| | | IL 291629 A | 01-05-2022 |
| | | IL 291744 A | 01-05-2022 |
| | | IL 300021 A | 01-03-2023 |
| | | IL 306077 A | 01-11-2023 |
| | | IL 322027 A | 01-09-2025 |

EPO FORM P0460

page 1 de 3

**ANNEXE AU RAPPORT DE RECHERCHE EUROPEENNE
RELATIF A LA DEMANDE DE BREVET EUROPEEN NO.**

EP 25 20 8975

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-02-2026

| Document brevet cité au rapport de recherche | Date de publication | Membre(s) de la famille de brevet(s) | Date de publication |
|---|---|---|---|
| | | JP 6736478 B2 | 05-08-2020 |
| | | JP 6878505 B2 | 26-05-2021 |
| | | JP 6891314 B2 | 18-06-2021 |
| | | JP 6972065 B2 | 24-11-2021 |
| | | JP 7052098 B2 | 11-04-2022 |
| | | JP 7282850 B2 | 29-05-2023 |
| | | JP 7326039 B2 | 15-08-2023 |
| | | JP 7721593 B2 | 12-08-2025 |
| | | JP 2017518940 A | 13-07-2017 |
| | | JP 2019194127 A | 07-11-2019 |
| | | JP 2019194128 A | 07-11-2019 |
| | | JP 2019194129 A | 07-11-2019 |
| | | JP 2020111470 A | 27-07-2020 |
| | | JP 2021062979 A | 22-04-2021 |
| | | JP 2022008938 A | 14-01-2022 |
| | | JP 2023116453 A | 22-08-2023 |
| | | JP 2025176005 A | 03-12-2025 |
| | | KR 20170013973 A | 07-02-2017 |
| | | KR 20210013362 A | 03-02-2021 |
| | | KR 20210013363 A | 03-02-2021 |
| | | KR 20210013774 A | 05-02-2021 |
| | | KR 20210135372 A | 12-11-2021 |
| | | KR 20220062132 A | 13-05-2022 |
| | | KR 20220130241 A | 26-09-2022 |
| | | KR 20240011252 A | 25-01-2024 |
| | | KR 20250018426 A | 05-02-2025 |
| | | MX 364779 B | 06-05-2019 |
| | | MX 390432 B | 20-03-2025 |
| | | MX 394741 B | 21-03-2025 |
| | | MY 181457 A | 22-12-2020 |
| | | MY 190510 A | 26-04-2022 |
| | | MY 199419 A | 26-10-2023 |
| | | NZ 727752 A | 28-08-2020 |
| | | NZ 760250 A | 25-06-2021 |
| | | NZ 760251 A | 25-06-2021 |
| | | NZ 760253 A | 25-06-2021 |
| | | PL 3152712 T3 | 24-02-2025 |
| | | PL 3355255 T3 | 05-12-2022 |
| | | PT 3152712 T | 23-12-2024 |
| | | PT 3355255 T | 08-11-2022 |
| | | SG 10201906029U A | 27-08-2019 |
| | | SG 10201906030W A | 27-08-2019 |
| | | SG 10201906032Y A | 27-08-2019 |
| | | SG 10201906033R A | 27-08-2019 |
| | | SG 11201610025Y A | 29-12-2016 |
| | | US 2018075402 A1 | 15-03-2018 |

EPO FORM P0460

Pour tout renseignement concernant cette annexe : voir Journal Officiel de l'Office européen des brevets, No.12/82

page 2 de 3

## ANNEXE AU RAPPORT DE RECHERCHE EUROPEENNE
## RELATIF A LA DEMANDE DE BREVET EUROPEEN NO.

**EP 25 20 8975**

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**17-02-2026**

| Document brevet cité au rapport de recherche | Date de publication | Membre(s) de la famille de brevet(s) | | Date de publication |
|---|---|---|---|---|
| | | US | 2018276606 A1 | 27-09-2018 |
| | | US | 2018276607 A1 | 27-09-2018 |
| | | US | 2018276608 A1 | 27-09-2018 |
| | | US | 2020012268 A1 | 09-01-2020 |
| | | US | 2021149382 A1 | 20-05-2021 |
| | | US | 2022155797 A1 | 19-05-2022 |
| | | US | 2022300009 A1 | 22-09-2022 |
| | | US | 2022300010 A1 | 22-09-2022 |
| | | US | 2023376047 A1 | 23-11-2023 |
| | | US | 2025136375 A1 | 01-05-2025 |
| | | WO | 2015185628 A2 | 10-12-2015 |
| WO 2020073123 A1 | 16-04-2020 | CA | 3115838 A1 | 16-04-2020 |
| | | EP | 3864592 A1 | 18-08-2021 |
| | | US | 2020118222 A1 | 16-04-2020 |
| | | US | 2020410609 A1 | 31-12-2020 |
| | | WO | 2020073123 A1 | 16-04-2020 |

EPO FORM P0460

Pour tout renseignement concernant cette annexe : voir Journal Officiel de l'Office européen des brevets, No.12/82

**page 3 de 3**